# FASCICULE DE BREVET EUROPEEN

(11) **EP 2 047 411 B1**
(45) Date de publication et mention de la délivrance du brevet: **28.10.2015**
(21) Numéro de dépôt: 07823360.8
(22) Date de dépôt: 27.07.2007
(51) Int. Cl.: G06K 19/04, G06K 19/077

(54) **SUPPORT D'INFORMATION PRESENTANT UN CONNECTEUR MALE ET SON PROCEDE DE FABRICATION**
INFORMATIONSMEDIUM MIT EINEM STECKER UND HERSTELLUNGSVERFAHREN DAFÜR
INFORMATION MEDIUM HAVING A MALE CONNECTOR AND METHOD FOR PRODUCING SAME

(30) Priorité: 31.07.2006 FR 0653198
(43) Date de publication de la demande: 15.04.2009
(73) Titulaire: Oberthur Technologies, 92700 Colombes (FR)
(72) Inventeur: LAUNAY, François, 35500 Vitre (FR)
(74) Mandataire: Santarelli
(86) Numéro de dépôt international: PCT/FR2007/001303
(87) Numéro de publication internationale: WO 2008/015330

(56) Documents cités:
- EP-A- 1 332 858
- CH-A5- 689 680
- DE-A1- 4 242 992
- US-A- 5 244 840
- US-A1- 2003 052 398
- US-A1- 2004 137 664
- US-A1- 2006 022 055

## Description

L'invention concerne un support d'information présentant un connecteur mâle, par exemple du type clef USB, ainsi que son procédé de réalisation.

De tels supports d'informations sont de plus en plus fréquemment utilisés de nos jours comme support d'information amovible du fait de leur facilité de transport et de connexion aux dispositifs de traitement de l'information (tels que par exemple des micro-ordinateurs) qui possède un connecteur femelle correspondant.

Ces supports d'information comprennent en général un ou plusieurs microcircuits, tel qu'une mémoire reprogrammable (par exemple du type EEPROM) pour le stockage des informations sous forme numérique et un contrôleur apte à gérer l'échange des informations entre cette mémoire et le dispositif extérieur auquel est connecté le support d'information.

Le support d'information comprend également un boîtier extérieur qui renferme les circuits électriques, en particulier le ou les microcircuit(s) mentionné(s) ci-dessus, à l'exception du connecteur mâle qui dépasse en dehors du boîtier.

La surface du boîtier extérieur étant visible par l'utilisateur, elle porte en général des décors (tels que par exemple la marque où les caractéristiques techniques du support d'information).

La construction mécanique utilisée est toutefois assez mal adaptée à une utilisation d'un tel support d'information dans un cadre sécurisé, comme par exemple lorsque l'un des microcircuits est un microcontrôleur sécurisé, ou dans des applications nécessitant un certain niveau de sécurité, comme lorsque le support d'information vise une identification de son porteur (par exemple en vue d'une transaction bancaire ou dans le cadre de l'accès conditionnel à l'information).

Dans ce contexte, la demande de brevet FR 2 877 461 propose une clef USB dans laquelle un corps portant un élément de personnalisation graphique de la clef est disposé au sein d'une coque de protection transparente.

Les solutions de ce type n'apportent pas toutefois une sécurité optimale puisqu'il est par exemple possible à un utilisateur malintentionné, en démontant la coque transparente, de recouvrir l'élément de personnalisation graphique par un élément du même type afin de falsifier l'élément de personnalisation de la clef.

Si la demande de brevet US 2005/164 532 propose de noyer les microcircuits dans une matière plastique par moulage, la solution proposée dans ce document prévoit un boîtier extérieur métallique (et donc distinct) et n'apporte donc pas de solutions au problème de sécurité évoqué ci-dessus, notamment lorsqu'un élément de sécurité, tel qu'un identifiant graphique, doit être associé, théoriquement de manière inamovible, au support d'information.

Le brevet US 5 244 840 qui reflète le préambule de la revendication 12, propose un procédé de fabrication de carte à circuit intégré selon lequel on remplit un cadre de résine à travers une ouverture d'un circuit imprimé.

La demande de brevet US 2004/137 664 décrit quant à elle un procédé d'enrobage de composants électroniques ; des composants électronique, notamment un circuit imprimé, sont enrobés hermétiquement dans une coque monolithique en élastomère.

Dans ce cadre, l'invention propose un procédé de fabrication d'un support d'informations selon la revendication 1. Ce support d'informations comprenant un connecteur mâle, un microcircuit relié au connecteur et un boîtier extérieur renfermant le microcircuit. Le procédé de fabrication est caractérisé par une étape de formation d'une première partie monobloc avec le boîtier extérieur par moulage laissant libre le connecteur et enrobant le microcircuit.

Le microcircuit est ainsi inaccessible, sauf au prix d'une destruction du boîtier extérieur, facilement détectable par l'utilisateur.

Le procédé peut comprendre également une étape de formation d'une seconde partie monobloc avec le boîtier extérieur par moulage enrobant un élément de sécurité.

Le remplacement d'un tel élément de sécurité (par exemple en vue de sa falsification) est impossible sans destruction du boîtier extérieur.

L'élément de sécurité porte par exemple une représentation visuelle, tel qu'une photographie, ou un identifiant de l'utilisateur, par exemple son nom.

Ladite seconde partie est alors par exemple transparente, ce qui permet d'avoir accès à la représentation visuelle.

L'élément de sécurité peut être un élément gravé ou imprimé, par exemple un hologramme.

L'élément de sécurité peut également comprendre une encre sécurisée dont l'effet visuel est difficilement reproductible par un contrefacteur éventuel.

Le procédé peut également comprendre une étape de formation par moulage d'une seconde partie monobloc avec le boîtier extérieur et intégrant des pigments d'une encre sécurisée et/ou une étape de formation par moulage d'une seconde partie monobloc avec le boîtier extérieur et incorporant un parfum.

L'étape de formation de la première partie et l'étape de formation de la seconde partie sont par exemple réalisées simultanément. En variante, l'étape de formation de la seconde partie peut être réalisée par surmoulage sur la première partie.

Le moulage est par exemple réalisé par coulage d'une résine sans pression, ce qui permet d'éviter tout risque d'endommagement du microcircuit.

Dans ce cas, la viscosité de la résine est de préférence inférieure à 1000 mPa.s, par exemple comprise entre environ 30 et 110 mPa.s.

La température de transition vitreuse de la résine est quant à elle de préférence supérieure à 70°C.

La résine peut comporter un durcisseur. Il peut s'agir d'une résine polymérisable ou thermodurcissable.

En variante, le moulage peut être réalisé avec mise sous pression.

Le moule utilisé pour le moulage s'étend par exemple essentiellement verticalement, en particulier dans le cas du coulage sans pression, afin de limiter les surfaces non moulées en proportion par rapport à l'ensemble des surfaces.

Lorsque la première partie est moulée au contact d'une carte électronique portant le microcircuit, on peut prévoir sur la carte électronique des moyens d'ancrage de la première partie à la carte électronique.

L'invention propose également un support d'informations selon la revendication 16. Ce support d'informations comprend un connecteur mâle, un microcircuit relié au connecteur et un boîtier extérieur renfermant le microcircuit, caractérisé par une première partie moulée monobloc avec le boîtier extérieur et enrobant le microcircuit.

Ce support d'informations peut comprendre en outre une seconde partie moulée monobloc avec le boîtier extérieur et enrobant un élément de sécurité.

Ce support peut également inclure les caractéristiques optionnelles évoquées plus haut à propos du procédé de réalisation et les avantages qui en découlent.

D'autres caractéristiques et avantages de l'invention apparaîtront mieux à la lumière de la description qui suit, faite en référence aux dessins annexés dans lesquels :
- les figures 1 et 2 représentent deux étapes de la fabrication d'une clef USB conformément aux enseignements de l'invention ;
- la figure 3 représente une variante de réalisation du moule des figures 1 et 2 ;
- la figure 4 représente une variante de réalisation de la carte électronique des figures 1 et 2 ;
- la figure 5 représente un mode de réalisation alternatif ;
- la figure 6 représente un autre exemple de réalisation de l'invention dans lequel la clef USB intègre un élément de sécurité ;
- la figure 7 représente une variante de réalisation de la figure 6.

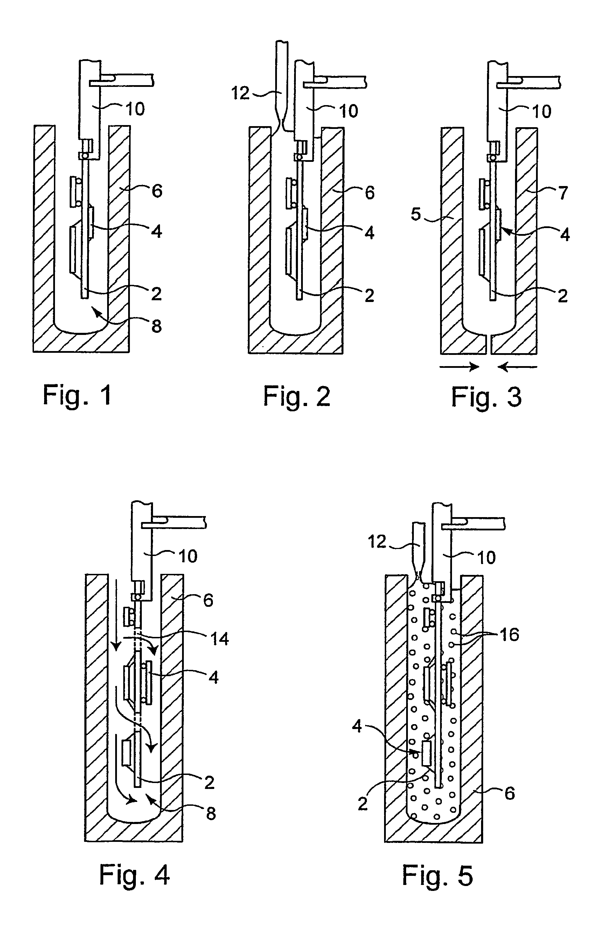

Un exemple de réalisation de l'invention va à présent être décrit en référence aux figures 1 et 2, qui représentent deux étapes de la fabrication d'une clef USB.

Sur la figure 1, une carte électronique 2 portant des microcircuits 4 (par exemple une mémoire, un microcontrôleur sécurisé et un contrôleur USB) est positionnée dans un moule ouvert 6 dont la cavité interne 8 a la forme du boîtier extérieur de la clef. Un connecteur mâle 10 conforme au standard USB formé à une extrémité de la carte électronique 2 dépasse de la surface du moule 6 de la longueur voulue. Le connecteur 10 est relié électriquement au contrôleur USB et permet ainsi la connexion et le dialogue des microcircuits 4 avec un dispositif électronique extérieur apte à fonctionner selon le standard USB, tel qu'un micro-ordinateur. On peut éventuellement utiliser le connecteur 10 pour maintenir la carte électronique en position pendant la coulée comme représenté sur les figures.

Une buse de dosage est alors positionnée, par exemple comme illustré sur la figure 2, de façon à injecter une résine de faible viscosité, de préférence une résine polyuréthane. Typiquement, on pourra utiliser des résines ayant une viscosité de l'ordre de 50 mPa.s, par exemple comprise entre 30 mPa.s et 110 mPa.s. La faible viscosité permet à la fois d'obtenir une surface supérieure plane lors du moulage et un bon enrobage des microcircuits.

La carte électronique 2 peut comporter des moyens d'ancrage (non représentés), tels que des évidements ou des reliefs, éventuellement formés par dépôt à cet effet de parties métalliques sur la carte 2, afin d'obtenir une bonne adhésion de la résine durcie à la carte électronique.

Plusieurs types de moules peuvent être utilisés.

Ainsi, par exemple, le moule peut avoir la forme d'une simple cavité. En variante, on peut utiliser un moule en deux parties 5, 7 venant se refermer autour de la carte électronique comme visible sur la figure 3. Des évents pour éviter les poches d'air peuvent en outre être utilisés si nécessaire.

Selon une autre variante, éventuellement combinable avec la précédente, le circuit imprimé de la carte électronique peut comprendre des évidements débouchants 14 comme représenté en figure 4 afin de faciliter le remplissage (le flux de résine est représenté par des flèches en figure 4) et mieux ancrer mécaniquement la carte 2 dans la résine.

Le moule est de préférence vertical (c'est-à-dire que sa plus grande dimension s'étend selon la verticale), ce qui permet d'avoir une surface supérieure (seule surface non moulée) de petites dimensions par rapport à l'ensemble et donc de former par moulage la grande majorité des surfaces du boîtier extérieur.

Quelle que soit la variante considérée, la résine est ensuite durcie à température ambiante, ou à une température relativement faible (par exemple inférieure à 90°C) dans le cas d'un polyuréthane. On obtient ainsi le boîtier extérieur de la clef USB.

Du fait de l'enrobage (ou encapsulage) de l'ensemble de la carte 2 (y compris donc des microcircuits 4), et de l'adhésion de la résine à ces éléments, le démontage mécanique de la pièce moulée est impossible.

Selon un autre mode de réalisation envisageable, il est possible de sécuriser encore davantage la clef en incorporant dans la résine des éléments de sécurité, par exemple tels que ceux utilisés dans la réalisation des billets de banque ou des cartes d'identité. Ainsi, par exemple, des pigments 16 réagissant sous éclairage à la lumière ultraviolette peuvent être incorporés dans la résine avant la coulée, comme montré en figure 5.

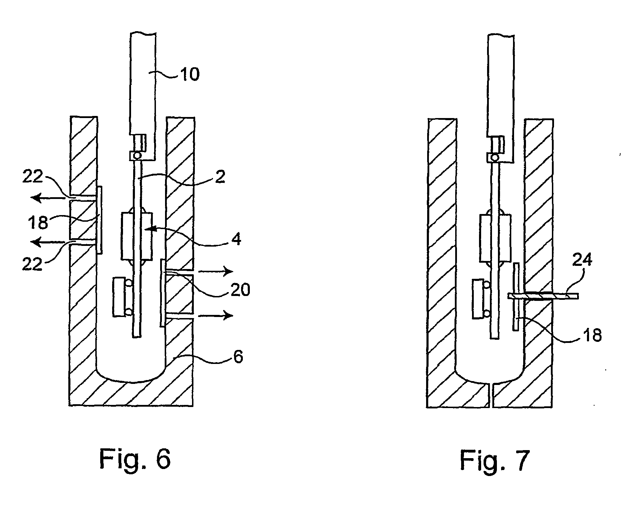

Selon une autre possibilité, un hologramme ou un dispositif optique variable 20 (ou OVD de l'anglais "*Optical Variable Device*") peuvent aussi être pré-positionnés dans le moule, soit de façon à affleurer la surface comme visible en figure 6, soit de manière à être enrobés par la résine comme représenté en figure 7. Dans le premier cas, l'hologramme 18 et/ou le dispositif optique 20 sont par exemple retenus au contact de la paroi du moule 6 au moyen de trous d'aspiration 20 formés dans la paroi du moule.

Dans le second cas, on utilise par exemple une fine aiguille rétractible 24 qui maintient l'hologramme 18 jusqu'à ce qu'il soit enrobé par la résine, et qui se rétracte ensuite avant que celle-ci ne durcisse. Cette solution est particulièrement adaptée lorsque l'élément de sécurité (ici l'hologramme) doit être situé dans l'épaisseur du boîtier extérieur.

La résine utilisée dans ce cas est de préférence transparente ou translucide.

On peut également incorporer un parfum dans la résine formant le boîtier extérieur. Pour ce faire, on peut par exemple diluer le parfum (c'est-à-dire l'essence) dans un diluant qui viendra lui-même imprégner le plastique (comme expliqué dans le brevet US 4 598 006). Une solution alternative consiste à mélanger le parfum avec un premier polymère apte à emprisonner les molécules de parfum dans sa matrice, puis à mélanger ce premier polymère avec un second polymère afin de former la résine à mouler (voir par exemple les brevets US 4 948 597 et US 5 206 080).

Les polymères utilisés pour ce faire sont exemple les polyéthylènes, le polybutylène téréphtalate, les polypropylènes et les polyuréthanes.

Les modes de réalisation présentés ci-dessus ne sont que des exemples possibles de mise en oeuvre de l'invention.

## Revendications

1. Procédé de fabrication d'un support d'informations comprenant un connecteur mâle (10), un microcircuit (4) relié au connecteur (10) et un boîtier extérieur renfermant le microcircuit (4), comportant une étape de formation d'une partie monobloc avec le boîtier extérieur par moulage laissant libre le connecteur (10) et enrobant le microcircuit (4), cette étape étant réalisée avec une résine incorporant un parfum.

2. Procédé selon la revendication 1, comprenant une étape de moulage enrobant un élément de sécurité (16 ; 18 ; 20).

3. Procédé selon la revendication 2, dans lequel l'élément de sécurité porte une représentation visuelle.

4. Procédé selon la revendication 3, dans lequel ladite partie est transparente.

5. Procédé selon la revendication 3 ou 4, dans lequel l'élément de sécurité est un élément gravé ou imprimé.

6. Procédé selon la revendication 3 ou 4, dans lequel l'élément de sécurité est un hologramme (18).

7. Procédé selon la revendication 3 ou 4, dans lequel l'élément de sécurité comprend une encre sécurisée (16).

8. Procédé selon la revendication 2, dans lequel l'élément de sécurité est apte à être détecté par un dispositif extérieur.

9. Procédé selon la revendication 8, dans lequel l'élément de sécurité est magnétique.

10. Procédé selon l'une des revendications 2 à 9, dans lequel l'élément de sécurité (18 ; 20) est maintenu par un élément rétractable (24) au cours de l'étape de formation de ladite partie.

11. Procédé selon l'une des revendications 2 à 9, dans lequel, l'étape de formation de ladite partie par moulage étant réalisée au sein d'un moule (6), l'élément de sécurité est maintenu au contact d'une paroi du moule par au moins un trou aspirant (20).

12. Procédé selon la revendication 1, dans lequel l'étape de formation par moulage intègre des pigments (16) d'une encre sécurisée.

13. Procédé selon l'une des revendications 1 à 12, dans lequel le moulage est réalisé par coulage d'une résine sans pression.

14. Procédé selon l'une des revendications 1 à 13, dans lequel, l'étape de formation étant réalisée au moyen d'un moule, le moule s'étend essentiellement verticalement.

15. Procédé selon l'une des revendications 1 à 14, dans lequel la partie est moulée au contact d'une carte électronique portant le microcircuit et dans lequel la carte électronique comprend des moyens d'ancrage de la première partie à la carte électronique.

16. Support d'informations comprenant un connecteur mâle (10), un microcircuit (4) relié au connecteur (10), un boîtier extérieur renfermant le microcircuit (4), et une partie moulée monobloc avec le boîtier extérieur et enrobant le microcircuit (4), **caractérisé en ce que** un parfum est incorporé dans la partie moulée.

## Patentansprüche

1. Verfahren zur Herstellung eines Informationsmediums, umfassend einen Stecker (10), eine Mikroschaltung (4), die mit dem Stecker (10) verbunden ist, und ein Außengehäuse, das die Mikroschaltung (4) einschließt, umfassend einen Schritt der Bildung eines einstückigen Teils mit dem Außengehäuse durch Formguss, das den Stecker (10) freilässt und die Mikroschaltung (4) umhüllt, wobei dieser Schritt mit einem Harz, das einen Duftstoff enthält, verwirklicht wird.

2. Verfahren nach Anspruch 1, umfassend einen Formungsschritt, der ein Sicherheitselement (16; 18; 20) umhüllt.

3. Verfahren nach Anspruch 2, bei dem das Sicherheitselement eine visuelle Darstellung trägt.

4. Verfahren nach Anspruch 3, bei dem das Teil transparent ist.

5. Verfahren nach Anspruch 3 oder 4, bei dem das Sicherheitselement ein graviertes oder gedrucktes Element ist.

6. Verfahren nach Anspruch 3 oder 4, bei dem das Sicherheitselement ein Hologramm (18) ist.

7. Verfahren nach Anspruch 3 oder 4, bei dem das Sicherheitselement eine gesicherte Tinte (16) umfasst.

8. Verfahren nach Anspruch 2, bei dem das Sicherheitselement geeignet ist, von einer externen Vorrichtung erkannt zu werden.

9. Verfahren nach Anspruch 8, bei dem das Sicherheitselement magnetisch ist.

10. Verfahren nach einem der Ansprüche 2 bis 9, bei dem das Sicherheitselement (18; 20) von einem beim Schritt der Formung des Teils herausziehbaren Element (24) gebildet ist.

11. Verfahren nach einem der Ansprüche 2 bis 9, bei dem, wobei der Schritt der Formung des Teils durch Formguss innerhalb einer Gussform (6) erfolgt, das Sicherheitselement mit einer Wand der Gussform durch mindestens ein Ansaugloch (20) in Kontakt gehalten wird.

12. Verfahren nach Anspruch 1, bei dem der Schritt der Formung durch Formguss Pigmente (16) einer gesicherten Tinte enthält.

13. Verfahren nach einem der Ansprüche 1 bis 12, bei dem der Formguss durch Gießen eines Harzes ohne Druck erfolgt.

14. Verfahren nach einem der Ansprüche 1 bis 13, bei dem, wobei der Formungsschritt mit Hilfe einer Gussform erfolgt, wobei sich die Gussform im Wesentlichen vertikal erstreckt.

15. Verfahren nach einem der Ansprüche 1 bis 14, bei dem das Teil in Kontakt mit einer elektronischen Karte, die die Mikroschaltung trägt, in Form gegossen wird, und bei dem die elektronische Karte Mittel zur Verankerung des ersten Teils mit der elektronischen Karte umfasst.

16. Informationsmedium, umfassend einen Stecker (10), eine Mikroschaltung (4), die mit dem Stecker (10) verbunden ist, ein Außengehäuse, das die Mikroschaltung (4) einschließt, und ein einstückiges Formgussteil mit dem Außengehäuse, das die Mikroschaltung (4) umhüllt, **dadurch gekennzeichnet, dass** ein Duftstoff in das Formgussteil integriert ist.

## Claims

1. Method for manufacturing an information medium comprising a male connector (10), a microcircuit (4) linked to the connector (10) and an outer package enclosing the microcircuit (4), comprising a step of formation of a single-piece part of the outer package by moulding leaving the connector (10) free and coating the microcircuit (4), this step being performed with a resin incorporating a scent.

2. Method according to Claim 1, comprising a step of moulding coating a security element (16; 18; 20).

3. Method according to Claim 2, in which the security element bears a visual representation.

4. Method according to Claim 3, in which said part is transparent.

5. Method according to Claim 3 or 4, in which the security element is an etched or printed element.

6. Method according to Claim 3 or 4, in which the security element is a hologram (18).

7. Method according to Claim 3 or 4, in which the security element comprises a secured ink (16).

8. Method according to Claim 2, in which the security element is suitable for detection by an external device.

9. Method according to Claim 8, in which the security element is magnetic.

10. Method according to one of Claims 2 to 9, in which the security element (18; 20) is held by a retractable element (24) during the step of formation of said part.

11. Method according to one of Claims 2 to 9, in which, the step of formation of said part by moulding being performed in a mould (6), the security element is held in contact with a wall of the mould by at least one suction hole (20).

12. Method according to Claim 1, in which the step of formation by moulding incorporates pigments (16) of a secured ink.

13. Method according to one of Claims 1 to 12, in which the moulding is performed by casting a resin without pressure.

14. Method according to one of Claims 1 to 13, in which, the step of formation being performed by means of a mould, the mould extends essentially vertically.

15. Method according to one of Claims 1 to 14, in which the part is moulded in contact with an electronic board bearing the microcircuit and in which the electronic board comprises means for securing the first part to the electronic board.

16. Information medium comprising a male connector (10), a microcircuit (4) linked to the connector (10), an outer package enclosing the microcircuit (4), and a moulded part of a single piece with the outer package and coating the microcircuit (4), **characterized in that** a scent is incorporated in the moulded part.
